# EUROPEAN PATENT SPECIFICATION

(11) **EP 3 790 225 B1**
(45) Date of publication and mention of the grant of the patent: **04.10.2023**
(21) Application number: 19195693.7
(22) Date of filing: 05.09.2019
(51) Int. Cl.: H04L 9/32, H04W 12/06, H04W 12/12, G06F 21/31, G06F 21/60, G06F 21/83, H04L 9/40

(54) **SECURING USER INPUTS IN MOBILE DEVICE**
SICHERUNG VON BENUTZEREINGABEN IN EINER MOBILEN VORRICHTUNG
SÉCURISATION D'ENTRÉES D'UTILISATEUR DANS UN DISPOSITIF MOBILE

(43) Date of publication of application: 10.03.2021
(73) Proprietor: Nokia Technologies Oy, 02610 Espoo (FI)
(72) Inventor: Boussard, Mathieu, 77930 Chailly-en-Bière (FR); Papillon, Serge, 75014 Paris (FR)
(74) Representative: Novagraaf Technologies

(56) References cited:
- EP-A1- 2 911 369
- US-A1- 2017 357 978

## Description

### FIELD OF INVENTION

The present subject matter generally relates to the field of user authentication in telecommunication networks.

### BACKGROUND

Mobile devices encounter security issues, in particular with online transactions or login processes when the used mobile device cannot be trusted (i.e. in situations such as man in the browser attacks, malware on device, etc).

Mobile devices are today the most used means to interact with Internet-based applications. This makes them a target of choice for attackers, to gain access to private information (e.g. a password to log into an account) or to impersonate the mobile device owner via session surfing (e.g. to make a financial transaction unbeknownst to the owner).

Unfortunately, despite significant efforts from device and Operating System provider, mobile devices security is complicated by the fact that users may unwittingly install applications from e.g. app stores that contain malware. Another issue is the delay in installing security updates after they have been issued by the Operating System provider, and the sheer lack of security updates for older models of smartphones after a certain lifetime. Finally, complex web-based applications (running in a mobile browser) also come with security issues (JavaScript exploits, etc), which may lead to man-in-the-browser situations.

In the context of a transaction between a human client and a server, a man in the middle can surf the session of the authenticated client (even in the case of multifactor authentication) and can perform his own transaction toward the server while showing an interface to the human client representing the client's transaction.Patent document published under number EP 2 911 369 A1 discloses a portable terminal device, comprising: a display section that detects an operation position and displays various objects; a display control section that arranges the various objects on a screen of the display section and outputs information of an operation performed on a predetermined region; an operation detection section that detects the operation performed on the predetermined region; and an execution processing section that executes predetermined processing based on a result of detection by the operation detection section.

Patent document published under number US 2017/357978 A1 discloses a method for inputting user data from a user into a mobile device. The mobile device comprises a microcontroller, a communication module and a user interface to enable the user to input the user data. The method comprises receiving, at the microcontroller, user data input via the user interface; processing, at the microcontroller, the user data to create processed data and outputting the processed data via said communication module to a mobile device or to a third party.

There is a need to counter those attacks and to provide an input/output mechanism that can be safely coupled with the mobile device for a transaction and that enables the validation of this transaction while protecting any authentication means (e.g. password/pin code) from interception by a potential attacker on this mobile device.

### SUMMARY

The invention is defined by the appended claims.

In one implementation, there is provided a method for securing user inputs in a mobile device using a service that is provided by an application server and requires user inputs from the mobile device, the method comprising the following steps in a companion device:
enabling an input interface and an audio interface in order to be declared as a input device and an audio device for the mobile device,
receiving parameters through the audio interface in an audio stream sent from the mobile device, the parameters being set by the application server and containing a query for user inputs for the service and a formula for a validation token, the query including a text for prompting for user inputs,
providing the query for user inputs,
receiving user inputs,
creating a validation token by applying the formula on the query, the user inputs and a random number,
sending the validation token in the form of required user inputs to the mobile device through the input interface, the token being sent to the application server by the mobile device.

Advantageously, it is provided a new transaction validation process for the user by showing user's own transaction and returning a proof that the user agrees to it. The proof includes a form of user authentication by something the user knows (biometry or code). The transaction validation process is valid even if an attacker has all power over the mobile device, meaning the attacker can intercept everything coming from a distant server and manipulate every input/output of the user. The companion device thus acts as a root of trust and can be used without any complex change to today's services and being generic enough to be compatible with all the service providers at once.

Advantageously, the companion device that acts both as an input device (e.g. a Bluetooth or USB keyboard or numeric keypad), an output device (e.g. a Bluetooth headset) for the untrusted smartphone (mobile device) and a display to show some text to the user. The input part is physically realized by the companion device (i.e. a pin code can be input on the numeric keypad), while the output is merely used as a communication channel between the mobile device and the companion device (e.g. no need for actual playing of transmitted audio). For example, the companion device can be a smartphone cover as it would ensure the companion device is always near the smartphone (i.e. local communication via NFC/BT/USB is possible, and the user does not forget it away from the mobile device).

In an embodiment, the parameters are encoded in an audio stream by a client application of the mobile upon reception of data for the service from the application server.

In an embodiment, the companion device decodes the audio stream and extracts the parameters.

In an embodiment, the validation token is created by applying a mix of at least a hash of the text, a hash of the user inputs and a random number.

In an embodiment, the query for user inputs is provided in the way of pin code, password or biometry.

In an embodiment, the user inputs are required for a transaction validation or login process.

In an embodiment, the text prompting for user inputs is provided in audio form or visual form.

In an embodiment, the companion device communicates with the mobile device through a Bluetooth connection.

In another implementation there is provided an apparatus for securing user inputs in a mobile device using a service that is provided by an application server and requires user inputs from the mobile device, comprising:
means for enabling an input interface and an audio interface in order to be declared as a input device and an audio device for the mobile device,
means for receiving parameters through the audio interface in an audio stream sent from the mobile device, the parameters being set by the application server and containing a query for user inputs for the service and a formula for a validation token, the query including a text for prompting for user inputs,
means for providing the query for user inputs,
means for receiving user inputs,
means for creating a validation token by applying the formula on the query, the user inputs and a random number,
means for sending the validation token in the form of required user inputs to the mobile device through the input interface, the token being sent to the application server by the mobile device.

In another implementation there is provided a computer-readable medium having embodied thereon a computer program for executing a method for securing user inputs in a mobile device. Said computer program comprises instructions which carry out steps according to the method according to the invention.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
FIG. 1 illustrates a schematic block diagram of a communication system according to one embodiment of the invention for securing user inputs in a mobile device.
FIG. 2 illustrates a flow chart illustrating a method for securing user inputs in a mobile device according to one embodiment of the invention.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the appended claims.

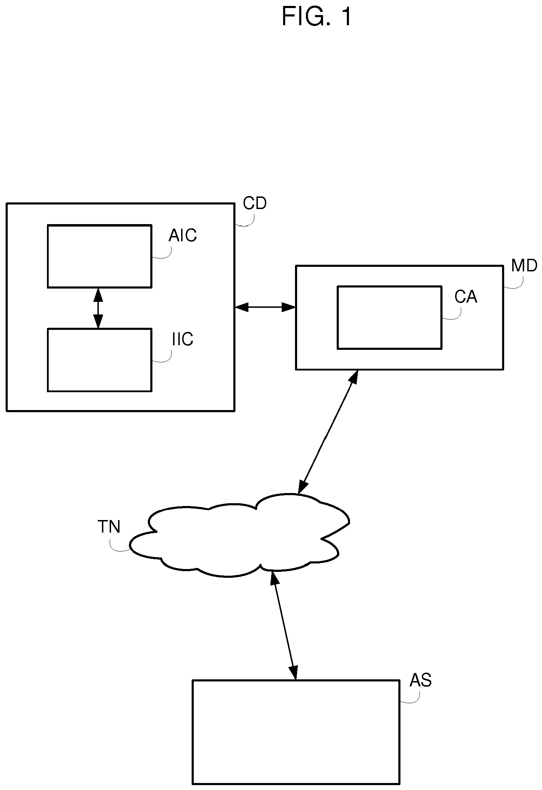

Referring to FIG. 1, an application server AS communicates through a telecommunication network TN with a mobile device MD being connected to a companion device CD.

The telecommunication network TN may be a wired or wireless network, or a combination of wired and wireless networks. The telecommunication network TN can be associated with a packet network, for example, an IP ("Internet Protocol") high-speed network such as the Internet or an intranet, or even a company-specific private network.

The telecommunication network TN is for example a digital cellular radio communication network of the GPRS (General Packet Radio Service), UMTS (Universal Mobile Telecommunications System), CDMA (Code Division Multiple Access) type, LTE (Long Term Evolution) or even 5G (Fifth Generation) type. Furthermore, the wireless telecommunication network TN can be accessed by the mobile device via a wireless link, such as a Wi-Fi network or Bluetooth connection.

In another example, the telecommunication network TN is a public wireless network of limited scope, such as WLAN (Wireless Local Area Network) or conforming to a standard 802.1x, or medium range according to the protocol WiMAX (World Wide Interoperability Microwave Access.

Additionally, the telecommunication network TN may be operating in accordance with fourth or fifth generation wireless communication protocols and/or the like as well as similar wireless communication protocols that may be developed in the future.

The application server AS is accessible by a client application of the mobile device and is delivering a service for which are used transactions or login processes, requiring sensitive user inputs.

The mobile device MD is capable of establishing a communication within a telecommunication network TN, for example with the application server AS, via a radio link with the base station. For instance, the communication device is a mobile phone, a smartphone, a tablet, or any portable telecommunication device.

The mobile device MD runs a client application CA dedicated to a specific service provided by the application server, under the form of a mobile application or a browser. The client application CA is a mobile application designed to communicate with the application server AS.

The mobile device MD may comprise a user interface, comprising at least one of a display, a keyboard, a touchscreen, a vibrator arranged to signal to a user by causing the device to vibrate, a speaker and a microphone. A user may be able to operate the device via the user interface, for example to accept incoming telephone calls, to originate telephone calls or video calls, to browse the Internet, to manage digital files stored in a memory or on a cloud accessible via a transmitter and a receiver.

The mobile device MD has an audio interface AIM able to process audio data, in particular able to process encoded audio stream in order to, for example, play it via internal speaker or send it to external speaker. The mobile device MD has an input interface IIM able to process different kind of inputs from a user, in particular able to process inputs from an internal or external keyboard.

The companion device CD is capable of establishing a communication with the mobile device MD. For example, the communication is a wired communication and can be established through a USB connection. For example, the communication is a short range communication that is contactless or wireless and can be related to NFC (Near Field Communication), Bluetooth or any UNB (Ultra Narrow Band) technology. The companion device CD has functionality of an audio device and is able to process an audio stream through an audio interface AIC: it can be declared as an audio device able to receive an audio stream from the mobile device. The companion device CD has functionality of an input device and is able to process inputs from a user through an input interface IIC: it can be declared as an input device able to transmit input data to the mobile device.

In one embodiment, the companion device is a "smartcover" fitted with an input mechanism (e.g. keypad), a LCD screen, Bluetooth capability and a simple processor to orchestrate the described process. It can be powered by a battery or rely on the mobile device power supply (e.g. inductive-charging, micro-USB...). The companion device is acting both as a Bluetooth keypad and a Bluetooth headset and is paired with the companion device.

In another embodiment, the companion device is a smartwatch or any wearable device fitted with an input mechanism (e.g. virtual keypad or voice recognition) and wireless capability.

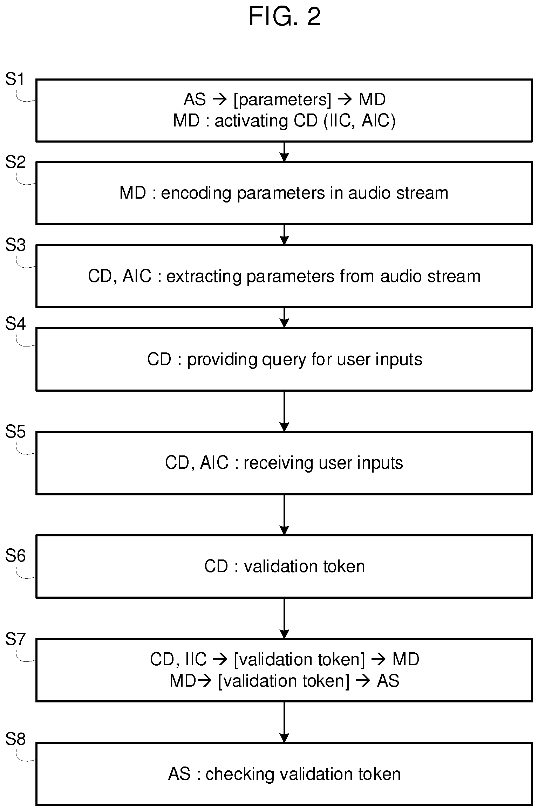

With reference to FIG. 2, a method for securing user inputs in a mobile device according to one embodiment of the invention comprises steps S1 to S8.

In step S1, a user of a mobile device MD wishes to use a service via the client application CA as mobile application or browser implemented in the mobile device MD. The service then requires user inputs for a login process or a transaction validation.

The application server AS determines the user profile and detects that the mobile device is able to handle sensitive user inputs process with the client application CA. The application server AS sends to the client application data to start the user inputs process, the application data including parameters to be encoded as audio stream. In one embodiment, the application server AS encodes itself the parameters in an audio stream.

The parameters contains at least a query for user inputs for the current transaction or login being performed, a random number (called a challenge or nonce) to avoid replay attacks, a formula stating how to combine and transform the parameters and the user inputs into a validation token, and a standard algorithm to encode binary to ascii (like base64, or hexadecimal format). The query includes a text prompting for user inputs. The parameters can further contain a salt (in the case of a password or pin code) depending of the authentication process.

The client application CA instructs the user to activate the companion device CD. On activation, the companion device enables the input interface IIC and the audio interface AIC and declares itself as a input device like a remote keyboard (by a standardized protocol, like Bluetooth) and a remote audio device like a remote headset (by a standardized protocol like Bluetooth). This creates a bi-directional communication between the client application CA and the companion device CD.

In step S2, the client application CA encodes all the received parameters into an audio stream and provides the data for user inputs to the user, for example on the mobile device screen through an entry field. In one embedment, the received parameters are already encoded in an audio stream and the client application forwards the audio stream to the companion device.

In step S3, as the companion device CD has declared itself as an audio device, like a remote headset, the companion device receives the encoded audio stream from the client application through the audio interface AIC. The companion device decodes the audio stream and extracts the parameters (while the user doesn't hear the audio stream).

Especially, the companion device identifies the formula from the parameters for the creation of a validation token. To be attack proof, the validation token must include the hash (any standard hash function will do) of the text. This way ensures that the user sees or hears the transaction that is currently being made. The formula gives instructions for a mix of the hash of the text, the hash of the credentials (appended or not with a salt) or biometric input, and the random number in one encapsulating hash. Thus the pin code cannot be guessed from the output and the validation token mixes the authentication of the user and the transaction or login process being seen by the server. Thus the real shown text of the current transaction is forced to be mixed in a hash with the authentication of the user.

In step S4, the companion device provides the query for user inputs in the way of requesting a pin code, password or biometry through a user interface, for example through a screen or via an audio request. In parallel, the companion device provides the text related to the query (the one provided by the application server) in audio form or visual form.

For example, the companion device shows the current transaction text to the user on the screen and asks for user inputs as a pin code. In another example, the companion device plays the current transaction text as an audio file.

In step S5, the companion device CD receives the user inputs provided by the user through the input interface IIC.

For example, the user can perform the user inputs using e.g. the embedded keypad on the companion device or a biometric sensor. In another example, the user can perform the user inputs using voice and the companion device performs a speech-to-text transformation of the content pronounced by the user.

In step S6, the companion device CD applies the formula on the parameters and the user inputs to create the validation token.

The validation token is thus the results of a mix of the hash of the query, the hash of the user inputs for example as credentials (appended or not with a salt), and the random number in one encapsulating hash. The companion device encodes the validation token as a binary token into something that can be typed by a keyboard (by the standard algorithm passed as parameter) and as it is declared as a keyboard, simulates the typing of this code.

In step S7, the companion device sends the encoded validation token through the input interface IIC to the mobile device MD and the application client of the mobile device receives the encoded validation token as the required user inputs, for example in the input field as if it was typed on its own virtual keyboard. Once the user validates the user inputs, the validation token is sent to the application server AS for verification.

In step S8, the application server checks if the validation token corresponds to a value calculated on its side, using the same formula. If the validation token matches the value, it means that it has been encoded with the real user inputs (pin code or biometry) coming from the user, with the hash of the real transaction text and with the random number.

As the validation token has been created in the companion device that is trusted (where there is no attacker) and that hashes itself the text that it shows to the user, no man in the middle manipulation could show an alternate text or get the user inputs. The random number prevents any replay attack. The application server has a proof that the transaction or login process has been validated by the authenticated user.

In a security consideration, the attacker that is surfing a session wants to perform his own transaction and will try to manipulate the software or the user to validate his transaction. Thanks to the companion device, the attacker does not get to know the user inputs, so he cannot compute the validation token by himself. But the attacker does not want to transfer to the companion device the real current transaction because it is not the transaction of the user but his own. If he changes the text to show to the user to reflect what the user thinks the transaction is, then the hash of the shown text will be different, and the validation token won't be correct. His only way to manipulate the validation process would be to exploit the formula. As the formula hashes at least together the random number, the hash of the query (like the shown text), and the user inputs, the attacker cannot manipulate the formula to reflect his own transaction.

An embodiment comprises a companion device CD under the form of an apparatus comprising one or more processor(s), I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

## Claims

1. A method for securing user inputs in a mobile device (MD) using a service that is provided by an application server (AS) and requires user inputs from the mobile device, the method comprising the following steps in a companion device (CD):
enabling (S 1) an input interface (IIC) and an audio interface (AIC) in order to be declared as an input device and an audio device for the mobile device (MD),
receiving (S3) parameters through the audio interface in an audio stream sent from the mobile device, the parameters being set by the application server and containing a query for user inputs for the service and a formula for a validation token, the query including a text for prompting for user inputs,
providing (S4) the query for user inputs,
receiving (S5) user inputs,
creating (S6) a validation token by applying the formula on the query, the user inputs and a random number,
sending (S7) the validation token in the form of required user inputs to the mobile device through the input interface, the token being sent to the application server by the mobile device.

2. The method as claimed in claim 1, wherein the parameters are encoded in an audio stream by a client application of the mobile device upon reception of data for the service from the application server.

3. The method as claimed in claim 1 or 2, wherein the companion device decodes the audio stream and extracts the parameters.

4. The method as claimed in any of the claims 1 to 3 wherein the validation token is created by applying a mix of at least a hash of the text, a hash of the user inputs and a random number.

5. The method as claimed in any of the claims 1 to 4, wherein the query for user inputs is provided in the way of pin code, password or biometry.

6. The method as claimed in any of the claims 1 to 5, wherein the user inputs are required for a transaction validation or login process.

7. The method as claimed in any of the claims 1 to 6, wherein the text prompting for user inputs is provided in audio form or visual form.

8. The method as claimed in any of the claims 1 to 7, wherein the companion device communicates with the mobile device through a Bluetooth connection.

9. Apparatus for securing user inputs in a mobile device (MD) using a service that is provided by an application server (AS) and requires user inputs from the mobile device, comprising:
means for enabling an input interface (IIC) and an audio interface (AIC) in order to be declared as an input device and an audio device for the mobile device (MD),
means for receiving parameters through the audio interface in an audio stream sent from the mobile device, the parameters being set by the application server and containing a query for user inputs for the service and a formula for a validation token, the query including a text for prompting for user inputs,
means for providing the query for user inputs,
means for receiving user inputs,
means for creating a validation token by applying the formula on the query, the user inputs and a random number,
means for sending the validation token in the form of required user inputs to the mobile device through the input interface, the token being sent to the application server by the mobile device.

10. A computer-readable medium having embodied thereon a computer program for executing a method for securing user inputs in a mobile device (MD) according to any of claims 1 to 8.

## Patentansprüche

1. Verfahren zum Sichern von Benutzereingaben in eine mobile Vorrichtung (MD) unter Verwendung eines Dienstes, der durch einen Anwendungsserver (AS) bereitgestellt wird und Benutzereingaben von der mobilen Vorrichtung erfordert, wobei das Verfahren die folgenden Schritte in einer Begleitvorrichtung (CD) umfasst:
Aktivieren (S1) einer Eingabeschnittstelle (IIC) und einer Audioschnittstelle (AIC), um zu einer Eingabevorrichtung bzw. eine Audiovorrichtung für die mobile Vorrichtung (MD) erklärt zu werden,
Empfangen (S3) von Parametern über die Audioschnittstelle in einem von der mobilen Vorrichtung gesendeten Audiostream, wobei die Parameter durch den Anwendungsserver eingestellt werden und eine Anfrage für Benutzereingaben für den Dienst und eine Formel für ein Validierungstoken enthalten, wobei die Anfrage einen Text zum Anfordern von Benutzereingaben beinhaltet,
Bereitstellen (S4) der Anfrage für Benutzereingaben,
Empfangen (S5) von Benutzereingaben,
Erstellen (S6) eines Validierungstokens durch Anwenden der Formel auf die Anfrage, die Benutzereingaben und eine Zufallszahl,
Senden (S7) des Validierungstokens in der Form von erforderlichen Benutzereingaben über die Eingabeschnittstelle an die mobile Vorrichtung, wobei das Token von der mobilen Vorrichtung an den Anwendungsserver gesendet wird.

2. Verfahren nach Anspruch 1, wobei die Parameter nach Empfang von Daten für den Dienst vom Anwendungsserver durch eine Clientanwendung der mobilen Vorrichtung in einem Audiostream codiert werden.

3. Verfahren nach Anspruch 1 oder 2, wobei die Begleitvorrichtung den Audiostream decodiert und die Parameter extrahiert.

4. Verfahren nach einem der Ansprüche 1 bis 3, wobei das Validierungstoken durch Anwenden einer Vermischung von mindestens einem Hash des Textes, einem Hash der Benutzereingaben und einer Zufallszahl erstellt wird.

5. Verfahren nach einem der Ansprüche 1 bis 4, wobei die Anfrage für Benutzereingaben mittels eines Pincodes, eines Passworts oder Biometrie bereitgestellt wird.

6. Verfahren nach einem der Ansprüche 1 bis 5, wobei die Benutzereingaben für eine Transaktionsvalidierung oder einen Anmeldeprozess erforderlich sind.

7. Verfahren nach einem der Ansprüche 1 bis 6, wobei der Benutzereingaben anfordernde Text in Audioform oder in visueller Form bereitgestellt wird.

8. Verfahren nach einem der Ansprüche 1 bis 7, wobei die Begleitvorrichtung über eine Bluetoothverbindung mit der mobilen Vorrichtung kommuniziert.

9. Einrichtung zum Sichern von Benutzereingaben in eine mobile Vorrichtung (MD) unter Verwendung eines Dienstes, der durch einen Anwendungsserver (AS) bereitgestellt wird und Benutzereingaben von der mobilen Vorrichtung erfordert, die Folgendes umfasst:
Mittel zum Aktivieren einer Eingabeschnittstelle (IIC) und einer Audioschnittstelle (AIC), um zu einer Eingabevorrichtung bzw. eine Audiovorrichtung für die mobile Vorrichtung (MD) erklärt zu werden,
Mittel zum Empfangen von Parametern über die Audioschnittstelle in einem von der mobilen Vorrichtung gesendeten Audiostream, wobei die Parameter durch den Anwendungsserver eingestellt werden und eine Anfrage für Benutzereingaben für den Dienst und eine Formel für ein Validierungstoken enthalten, wobei die Anfrage einen Text zum Anfordern von Benutzereingaben beinhaltet,
Mittel zum Bereitstellen der Anfrage für Benutzereingaben,
Mittel zum Empfangen von Benutzereingaben,
Mittel zum Erstellen eines Validierungstokens durch Anwenden der Formel auf die Anfrage, die Benutzereingaben und eine Zufallszahl,
Mittel zum Senden des Validierungstokens in der Form von erforderlichen Benutzereingaben über die Eingabeschnittstelle an die mobile Vorrichtung, wobei das Token von der mobilen Vorrichtung an den Anwendungsserver gesendet wird.

10. Computerlesbares Medium, auf dem sich ein Computerprogramm zum Ausführen eines Verfahrens zum Sichern von Benutzereingaben in eine mobile Vorrichtung (MD) gemäß einem der Ansprüche 1 bis 8 befindet.

## Revendications

1. Procédé pour sécuriser des entrées utilisateur dans un dispositif mobile (MD) en utilisant un service qui est fourni par un serveur d'application (AS) et qui nécessite des entrées utilisateur à partir du dispositif mobile, le procédé comprenant les étapes suivantes dans un dispositif compagnon (CD) :
activer (S1) une interface d'entrée (IIC) et une interface audio (AIC) afin d'être déclaré comme dispositif d'entrée et dispositif audio pour le dispositif mobile (MD),
recevoir (S3) des paramètres via l'interface audio dans un flux audio envoyé par le dispositif mobile, les paramètres étant définis par le serveur d'application et contenant une requête pour des entrées utilisateur pour le service et une formule pour un jeton de validation, la requête comportant un texte d'invite pour des entrées utilisateur,
fournir (S4) la requête pour des entrées utilisateur,
recevoir (S5) des entrées utilisateur,
créer (S6) un jeton de validation en appliquant la formule à la requête aux entrées utilisateur et à un nombre aléatoire,
envoyer (S7) le jeton de validation sous forme d'entrées utilisateur requises au dispositif mobile via l'interface d'entrée, le jeton étant envoyé au serveur d'application par le dispositif mobile.

2. Procédé selon la revendication 1, dans lequel les paramètres sont encodés dans un flux audio par une application client du dispositif mobile à la réception de données pour le service du serveur d'application.

3. Procédé selon la revendication 1 ou 2, dans lequel le dispositif compagnon décode le flux audio et extrait les paramètres.

4. Procédé selon l'une des revendications 1 à 3 dans lequel le jeton de validation est créé en appliquant un mélange d'au moins un hachage du texte, un hachage des entrées utilisateur et un nombre aléatoire.

5. Procédé selon l'une des revendications 1 à 4, dans lequel la requête pour des entrées utilisateur est fournie au moyen d'un code pin, d'un mot de passe ou d'une biométrie.

6. Procédé selon l'une des revendications 1 à 5, dans lequel le entrées utilisateur sont requises pour la validation d'une transaction ou d'un processus de connexion.

7. Procédé selon l'une des revendications 1 à 6, dans lequel le texte d'invite pour des entrées utilisateur est fourni sous forme audio ou visuelle.

8. Procédé selon l'une des revendications 1 à 7, dans lequel le dispositif compagnon communique avec le dispositif mobile via une connexion Bluetooth.

9. Appareil pour sécuriser des entrées utilisateur dans un dispositif mobile (MD) en utilisant un service qui est fourni par un serveur d'application (AS) et qui nécessite des entrées utilisateur à partir du dispositif mobile, comprenant :
des moyens pour activer une interface d'entrée (IIC) et une interface audio (AIC) afin d'être déclaré comme dispositif d'entrée et dispositif audio pour le dispositif mobile (MD),
des moyens pour recevoir des paramètres via l'interface audio dans un flux audio envoyé par le dispositif mobile, les paramètres étant définis par le serveur d'application et contenant une requête pour des entrées utilisateur pour le service et une formule pour un jeton de validation, la requête comportant un texte d'invite pour des entrées utilisateur,
des moyens pour fournir la requête pour des entrées utilisateur,
des moyens pour recevoir des entrées utilisateur,
des moyens pour créer un jeton de validation en appliquant la formule à la requête aux entrées utilisateur et à un nombre aléatoire,
des moyens pour envoyer le jeton de validation sous forme d'entrées utilisateur requises au dispositif mobile via l'interface d'entrée, le jeton étant envoyé au serveur d'application par le dispositif mobile.

10. Support lisible par ordinateur sur lequel est incorporé un programme informatique pour exécuter un procédé pour sécuriser des entrées utilisateur dans un dispositif mobile (MD) selon les revendications 1 à 8.
